Europäisches Patentamt

(19) European Patent Office   (11) Numéro de publication: **0 197 977**
**B1**
Office européen des brevets

(12) **FASCICULE DE BREVET EUROPEEN**

(45) Date de publication du fascicule du brevet:    (51) Int. Cl.⁴: **A 21 D 13/00**
  20.12.89

(21) Numéro de dépôt: **85904833.2**

(22) Date de dépôt: **04.10.85**

(86) Numéro de dépôt international:
  **PCT/FR 85/00277**

(87) Numéro de publication internationale:
  **WO 86/02239 (24.04.86 Gazette 86/9)**

(54) **PRODUIT ALIMENTAIRE ET PROCEDE DE PREPARATION DE CE PRODUIT.**

(30) Priorité: **09.10.84 FR 8415489**
  **23.09.85 FR 8514073**

(43) Date de publication de la demande:
  **22.10.86 Bulletin 86/43**

(45) Mention de la délivrance du brevet:
  **20.12.89 Bulletin 89/51**

(84) Etats contractants désignés:
  **AT BE CH DE FR GB IT LI LU NL SE**

(56) Documents cités:
  **FR-A- 2 247 987**
  **FR-A- 2 434 576**

(73) Titulaire: **CLERC, Francois, 52, avenue du Général Leclerc, F-78230 Le Pecq (FR)**

(72) Inventeur: **CLERC, Francois, 52, avenue du Général Leclerc, F-78230 Le Pecq (FR)**

(74) Mandataire: **Hranitzky, Wilhelm Max et al, NOVAPAT - CABINET CHEREAU 9, rue du Valais, CH-1202 Genève (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

La présente invention a pour objet un produit alimentaire constitué par une tranche de pain, une préparation culinaire comprenant au moins une partie liquide à la température ambiante et au moins une couche de matière comestible de structure homogène, intercalée entre la tranche de pain et la préparation alimentaire, en adhérant sur la tranche de pain tout en retenant la préparation culinaire.

L'invention a également pour objet un procédé de préparation de ce produit alimentaire.

On connaît depuis longtemps des produits alimentaires constitués d'une tranche de pain recouverte par une couche d'une substance pâteuse à la température ambiante, sur laquelle sont placés des ingrédients comestibles plus ou moins élaborés, tels que du jambon, des cornichons, des feuilles de salade, des tranches de tomate, des tranches d'œuf dur, etc.

Il a également été proposé (brevet des Etats Unis d'Amérique n° 3 667 963) de préparer un produit, destiné à remplacer la pizza, constitué par une moitié de petit pain portant une garniture complète de pizza, disposée sur la surface de coupe, avec interposition de margarine pour obturer les trous de cette surface et éviter que les ingrédients liquides de la garniture de pizza ne viennent imbiber la mie à l'intérieur du petit pain.

Jusqu'à présent, les seules matières utilisées comme substance comestible pâteuse pour recouvrir la tranche de pain ont été le beurre, la margarine, ou le fromage blanc, ou encore la gélatine.

Bien qu'il soit indiqué, dans le brevet des Etats-Unis d'Amérique susmentionné, que l'on peut faire subir au produit décrit dans ce brevet une cuisson à une température de l'ordre de 250°C, pendant quelques minutes, pour le mettre sous une forme appropriée à sa consommation, la garniture de pizza étant placée sur la couche de margarine étalée sur la moitié de petit pain, les matières utilisées jusqu'à maintenant, comme indiqué ci-dessus, pour recouvrir la tranche de pain, ne permettraient pas d'éviter que, dans le cas où l'on placerait sur la tranche de pain une préparation culinaire comprenant une proportion notable de partie liquide, tels que des préparations de haute gastronomie comprenant des jus ou des sauces, ce liquide n'imbibe la mie de pain pendant le stockage du produit ou, en tout cas, lors de son réchauffage pour l'amener à une température appropriée à sa consommation. Cela, en particulier dans le cas où l'on désirerait effectuer ce réchauffage à une tempoérature et pendant une durée suffisante pour conférer à la tranche de pain une consistance croustillante. Il en résulterait un ramollissement complet de la tranche de pain, la rendant totalement inapte à assurer toute fonction de support à la préparation culinaire.

Il est, en outre, à remarquer que, dans les produits alimentaires connus du genre susmentionné, la garniture placée sur la tranche de pain n'est que faiblement liée à cette dernière, de sorte qu'il y a un risque important que la garniture se détache du support lors de la manipulation de ces produits, par exemple au cours de leur transport ou de leur emballage.

C'est pourquoi il n'a pas été possible, jusqu'à maintenant, de préparer un produit alimentaire constitué par une tranche de pain pouvant servir de support à une garniture consistant en une préparation culinaire élaborée, comprenant au moins une partie liquide, telle qu'une sauce ou un jus, cette tranche conservant sa cohésion et sa rigidité initiale, aussi bien pendant l'entreposage de longue durée du produit, éventuellement à l'état réfrigéré ou congelé, qu'après un réchauffage de celui-ci à une température et pendant une durée permettant de rendre le pain croustillant.

Un produit alimentaire consistant en une tarte en pâte levée, recouverte d'une sauce ou d'une crème liée sur laquelle peut être placée une garniture éventuelle, à base d'ingrédients divers tels que légumes, poissons, volailles, viande, abats, fromage ou œufs, est décrit dans la demande de certificat d'addition n° 2 434 576 à un brevet français.

Ce document n'indique nullement une solution au problème technique qui se pose dans le cas de la fabrication du produit concerné par la présente invention.

En effet, il se rapporte à l'application de la garniture sur un fond de tarte qui comporte, dans sa partie en contact avec la garniture, soit une pâte crue essentiellement imperméable soit une croûte beaucoup moins perméable que l'intérieur de la pâte levée cuite.

L'enseignement donné dans ce document n'est donc pas applicable à la préparation du produit selon la présente invention, dans lequel la garniture partiellement liquide est supportée par une tranche de pain dont la partie en contact avec la garniture ne comporte pas de croûte ou région imperméable.

L'invention a donc pour but de résoudre le problème technique susmentionné en fournissant un aliment tel qu'indiqué plus haut susceptible de constituer à lui seul le plat principal d'un repas en vue d'une restauration rapide, tout en présentant la qualité, la diversité et le prestige des préparations culinaires de haute gastronomie, notamment conformes aux traditons culinaires françaises.

L'invention a également pour but de permettre de fournir un produit alimentaire correspondant, par sa qualité, aux plats de grande tradition culinaire, tout en se prêtant à une préparation industrielle, cet aliment constituant un produit alimentaire pouvant être consommé tel quel ou bien être conservé à l'état réfrigéré ou congelé en ne nécessitant qu'un réchauffage rapide pour être mis sous forme appropriée à sa consommation.

Un autre but de l'invention est de fournir un aliment comprenant une garniture culinaire de haute gastronomie, pouvant être préparé à l'avance et conservé sous réfrigération ou congélation afin d'être réchauffé rapidemment, juste avant sa consommation, celle-ci, pouvant être effectuée sans nécessiter d'assiette ni de couvert.

A cet effet, le produit alimentaire selon l'invention est caractérisé par le fait que la matière comestible, de structure homogène, intercalée entre la tranche de pain et la préparation culinaire, est constituée par une préparation comestible, à base d'amidon gélifié en milieu aqueux, ayant, aussi bien la température ambiante que dans une gamme de température permettant de réchauffer la préparation culinaire jusqu'à une valeur appropriée pour sa consommation, une consistance telle qu'elle ne coule pas et n'imbibe pas la partie intérieur de la tranche de pain.

Le procédé pour la fabrication de ce produit est caractérisé par le fait qu'il comprend les opérations suivantes:

préparation d'une tranche de pain;

préparation d'une substance comestible à base d'amidon gélifié;

réglage de la viscosité de cette substance à une valeur telle qu'elle se prête à son application sur la tranche de pain, tout en obturant le trous ouverts au voisinnage de sa surface, sans s'introduire à l'intérieur du pain; étalement d'au moins une couche de cette substance comestible, se trouvant dans l'état de viscosité ainsi réglé, sur la tranche de pain, de façon à trous ouverts; confection d'une préparation alimentaire, comprenant au moins une partie liquide à la température ambiante et, application de celle-ci sur la surface du revêtement de matière comestible à base d'amidon gélifié.

Conformément à un premier mode de mise en œuvre du procédé selon l'invention, la préparation de la substance à base d'amidon gélatinisé comprend le délayage d'au moins une matière amylacée dans un milieu aqueux et le chauffage du mélange ainsi obtenu à une température et pendant une durée suffisante pour provoquer la gélification de l'amidon. De préférence, le réglage de la viscosité de la substance comestible à base d'amidon gélifié est effectué par refroidissement du produit contenant de l'amidon gélifié, immédiatement après son chauffage, jusqu'à une température telle qu'il prenne la consistance désirée. En variante, le réglage de la viscosité peut être effectué par refroidissement jusqu'à la température ambiante du produit contenant de l'amidon gélifié et chauffage ultérieur jusqu'à une température telle que le produit prenne la consistance désirée.

La matière amylacée peut être, par exemple, choisie dans le groupe comprenant l'amidon ainsi que les farines de céréales, les farines de légumineuses et les fécules. Par exemple, la matière amylacée peut être constituée par de la farine de blé, de seigle, d'orge, d'avoine, de maïs, de manioc, de riz, de haricot ou de la fécule de pomme de terre.

Avantageusement, le milieu aqueux est choisi dans le groupe comprenant l'eau, le lait, les jus de légumes, les jus de viande et les jus de chair de poissons, de crustacés ou de mollusques.

Conformément à une mode de mise en œuvre particulièrement avantageux du procédé selon l'invention, on chauffe la substance amylacée, en présence de matière grasse, de manière à produire un roux, avant son mélange avec le milieu aqueux. La matière grasse ainsi utilisée peut être choisie, par exemple, parmi le beurre et la margarine.

Avantageusement, au cours de l'opération de gélification de la substance amylacée, l'on ajoute au milieu aqueux contenant la substance amylacée au moins une substance alimentaire capable de modifier la viscosité de ce milieu. Cette substance alimentaire peut être avantageusement choisie parmi le jaune d'œuf et le fromage.

Conformément à un mode de mise en œuvre particulièrement avantageux de procédé, la matière amylacée est constituée de farine de céréales, le milieu aqueux étant constitué de lait, et l'on mélange du jaune d'œuf et du fromage, par exemple du fromage du gruyère, avec le milieu aqueux, pour en modifier la viscosité au cours de l'opération de gélification de l'amidon, après quoi l'on ajoute au produit ainsi obtenu une préparation culinaire additionnelle, liquide ou pâteuse, permettant d'en modifier la viscosité et/ou les propriétés organoleptiques et l'on mélange le tout intimement, de manière à former un produit final pratiquement homogène. Avantageusement, cette préparation culinaire additionnelle est choisie parmi les jus et les mousses de légumes, les jus de viande, les jus de chair de poisson, de crustacés ou de mollusques. De préférence, la proportion de préparation culinaire additionnelle correspond au plus à 50% du poids total de produit. En particulier, la proportion de préparation additionnelle est avantageusement de 30 à 40 en poids par rapport au poids total de produit. De préférence, les proportions de farine de céréales, de matière grasse, de lait, de jaunes d'œuf et de fromage entrant dans la préparation du produit contenant de l'amidon gélifié sont telles que ce produit constitue une sauce au fromage contenant de 70 à 110 grammes de farine par litre de lait.

Comme préparation culinaire additionnelle, on utilise, de préférence, un fond de canard, qui présente l'avantage d'avoir un goût fin et délicat mettant en valeur les propriétés organoleptiques de la préparation appliquée sur la substance comestible à base d'amidon gélifié, mais on pourrait également utiliser d'autres préparations, telles que des fonds de veau, de bœuf, de mouton, de gibier ou encore de la bisque de homard, du fumet de poisson, du jus de moule, ces préparations pouvant être relevées de toutes manières connues en soi, par exemple au moyen de tomates ou d'autres légumes.

Conformément à un autre mode de mise en œuvre du procédé, qui convient particulièrement bien dans le cas où le produit alimentaire est destiné à servir de dessert, la préparation culinaire appliquée sur la surface de la substance comestible à base d'amidon gélifié étant adaptée à cet effet, par exemple en étant constituée par une préparation sucrée, la matière amylacée est constituée de farine de céréales, le milieu aqueux étant constitué de lait, et la farine de céréales est incorporée dans un mélange homogène de jaune d'œuf et de saccharose, avant d'être délayée dans le lait, la température de chauffage pour la gélification de l'amidon étant comprise entre 75 et 85°C, de préférence entre 81 et 83°C.

Conformément à une variante du procédé selon l'invention, on étale sur la tranche de pain au moins deux couches successives de matière comestible à base d'amidon gélifié, différant entre elles par la nature de leur assaisonnement, la première de ces couches étant appliquée avant la préparation culinaire et la deuxième de ces couches étant appliquée au moins en partie en même temps que la préparation culinaire, de manière à en recouvrir partiellement la surface. Dans ce cas, la première couche de matière comestible à base d'amidon gélifié peut être avantageusement constituée par une préparation à goût neutre et peu prononcé, la deuxième couche étant constituée par une préparation de composition similaire mais relevée par un assaisonnement lui conférant un goût plus marqué.

Pour constituer la tranche de pain, on peut utiliser n'importe quelle sorte de pain, ayant une rigidité suffisante, et ayant, de préférence, une porosité relativement fine et uniforme, constitué, par exemple, de pain de froment, de seigle, etc. Pour étaler la préparation comestible à base d'amidon gélifié sur la tranche de pain, on peut procéder de toutes manières appropriées, en étalant cette matière sur la tranche de pain, soit manuellement, soit en utilisant des moyens mécaniques appropriés. De préférence, la couche ainsi appliquée a une épaisseur telle qu'elle dépasse d'un ou deux milimètres en dehors des alvéoles de la tranche de pain. Conformément à un mode de mise en œuvre particulier du procédé, on facilite la pénétration de la substance à la partie supérieure du pain grâce à une aspiration exercée au-dessous de la tranche, par exemple, en faisant défiler les tranches de pain sur un tapis à trous muni de prises d'air.

Comme préparation culinaire déposée sur la substance à base d'amidon gélatinisé, on peut utiliser des plats cuisinés extrêmement variés, pratiquement sans aucune limitation en ce qui concerne les possibilités de création. Par exemple, ces plats peuvent avoir l'une des compositions suivantes:

ratatouille, olives, confits de canard, sauce;

mousse de poissons, mousse d'épinards, saumon, sauce;

mousse de saumon, câpres, raie, sauce au vinaigre;

confiture d'oignons, gruyère, sauce, râble de lapins;

oseilles, sauce, roulade de filets de sole,

confiture d'oignons et de raisin, sauce, boudin noir en rondelles avec petits oignons nouveaux.

Après sa préparation, le produit peut être consommé immédiatement, ou bien être conservé pendant une longue durée après réfrigération ou congélation, par exemple à –30°C, et il se prête très bien à l'emballage, par exemple en poche d'aluminium serti.

Dans ce produit, la préparation culinaire placée sur la tranche de pain est très fortement liée à celle-ci, de sorte qu'elle n'a pas tendance à s'en détacher lors de la manipulation de l'ensemble, même dans le cas où la tranche de pain viendrait à être inclinée par rapport à l'horizontale. Ceci constitue un avantage supplémentaire du produit selon l'invention par rapport aux produits connus mentionnés plus haut.

Le réchauffage rapide du produit, effectué par exemple dans un four classique ou dans un four à micro-ondes ou encore par chauffage infrarouge, permet d'obtenir un plat chaud pouvant être consommé si désiré, sans avoir besoin d'assiette ni de couvert. Un tel produit constitue un produit de restauration de haute qualité qui n'est nullement comparable avec un sandwich, un croque-monsieur, un hot-dog ou une pizza.

On va maintenant donner des exemples non limitatifs du mode de préparation de la matière comestible à base d'amidon gélatinisé, ainsi que des exemples comparatifs, dans le cas particulier où la matière comestible est constituée d'un mélange de sauce au fromage, liée à l'amidon, et d'un fond de canard.

a) Préparation de la sauce au fromage liée à l'amidon:

On prépare la sauce, de manière connue en soi, à partir d'un roux (produit par chauffage plus ou moins prolongé de farine dans du beurre fondu) que l'on délaye dans du lait, cette opération étant suivie d'un chauffage du mélange, de manièr à provoquer son épaississement par coagulation de l'amidon contenu dans la farine, accompagné de l'adjonction de jaune d'œuf et de fromage de gruyère rapé ainsi que de substances d'assaisonnement usuelles (sel, poivre, muscade, etc.) pour terminer la sauce et en modifier la consistance et les propriétés organoleptiques et alimentaires.

La consistance du produit de coagulation de l'amidon en milieux aqueux est pratiquement indépendante du mode de cuisson (intensité, durée, etc.) et dépend essentiellement des proportions de farine et de milieu aqueux. Dans le cas où l'on prolonge le chauffage après la coagulation de l'amidon, on augmente la viscosité par suite de l'évaporation d'eau, ce qui équivaut à l'utilisationd'une proportion plus faible de milieux aqueux. Il est cependant à remarquer qu'une cuisson de durée trop prolongée risque de provoquer une altération du goût de la sauce.

Le tableau ci-dessous indique les proportions des principaux ingrédients utilisés dans cinq exemples de préparations de sauce au fromage, appropriées à l'obtention du résultat désiré conformément à l'invention ainsi que dans deux exemples comparatifs ne permettant pas d'obtenir ces résultats. En plus de ces ingrédients on utilise des proportions usuelles d'assaisonnement tels que sel, poivre, muscade, etc.

| Nature des ingrédients | Quantité des ingrédients | | | | | | |
|---|---|---|---|---|---|---|---|
| | Ex. 1 (selon invention) | Ex. 2 (selon invention) | Ex. 3 (selon invention) | Ex. 4 (selon invention) | Ex. 5 (selon invention) | Ex. 6 (comparatif) | Ex. 7 (comparatif) |
| Ingrédients pour la préparation du roux (poids en kg) | | | | | | | |
| farine de blé | 0,9 | 1,2 | 0,7 | 1,1 | 1,5 | 0,3 | 1,2 |
| beurre fondu | 0,9 | 0,6 | 0,5 | 0,9 | 1,2 | 0,3 | 0,4 |
| lait (litres) | 10 | 10 | 10 | 10 | 10 | 10 | 15 |
| gruyère rapé (kg) | 4 | 4 | 4 | 4 | 4 | 4,5 | 0 (préparation interrompue) |
| jaunes d'œuf (nb de pièces) | 50 | 50 | 50 | 50 | 50 | 100 | 0 (préparation interrompue) |

La sauce au fromage préparée conformément à l'exemple 1 présente une consistance optimale pour la suite de la préparation alors que la sauce selon l'exemple 2, qui a également une bonne consistance, est plus longue à préparer du fait qu'il est plus difficile de dissoudre les grumeaux lors de l'opération de délayage du roux dans le lait. Les sauces selon les exemples 3 et 4 sont respectivement plus fluides et plus épaisses que la sauce selon l'exemple 1, bien qu'encore convenables. La sauce selon l'exemple 5 est très épaisse et est à la limite supérieure de viscosité acceptable. La sauce selon l'exemple comparatif 6 est trop liquide, malgré l'adjonction supplémentaire de 0,5 kg de gruyère et 50 jaunes d'œufs, et elle ne permet pas d'obtenir le résultat recherché. Quant à la préparation selon l'exemple comparatif 7, elle a dû être interrompue avant l'adjonction de gruyère et de jaunes d'œufs en raison du fait qu'il n'a pas été possible d'éliminer les grumeaux lors de tentative de délayage du roux dans le lait.

b) Préparation de fond de canard:

On prépare, de manière connue en soi, le fond de canard par réduction de 9 kg de carcasse de canard dans 35 litres d'eau, en présence de légumes et assaisonnements usuels, de façon à obtenir 8 litres de fond.

c) Mélange de la sauce fromage avec le fond de canard:

Par mélange de deux parties en poids de sauce fromage préparée conformément aux exemples 1 à 4 (dont la densité est d'environ 1,06) avec une partie en poids de fond de canard préparé comme indiqué ci-dessus (dont la densité est de l'ordre de 1,11), on obtient une composition d'aspect homogène et ayant une consistance fine et onctueuse à la température ambiante, sans aucune tendance à couler lors d'une réchauffement à une température et pendant une durée permettant de porter la préparation culinaire à une température appropriée à sa consommation tout en conférant à la tranche de pain une consistance croustillante (par exemple par chauffage à une température maximale de 250°C, pendant 15 minutes).

La viscosité de la composition obtenue à partir de la sauce selon l'exemple 2 est du même ordre que celle de la sauce selon l'exemple 1, alors que les compositions obtenues à partir des sauces préparées selon les exemples 3 et 4 sont respectivement plus fluides et plus visqueuses (à une température donnée) que celles qui sont obtenues à partir de la sauce préparée selon l'exemple 1, tout en permettant également d'obtenir le résultat visé par l'invention. La composition obtenue à partir de la sauce préparée selon l'exemple 4 convient particulièrement bien dans le cas où la préparation culinaire appliquée sur la tranche de pain est susceptible d'exsuder un volume important de liquide lors du réchauffage, par exemple lorsqu'elle contient une proportion importante de légumes tels que des carottes ou des épinards.

Pour obtenir une viscosité convenable aussi bien à la température ambiante qu'à chaud, ainsi qu'un goût acceptable dans une composition obtenue à partir de la sauce préparée selon l'exemple 5, il est nécessaire de modifier les proportions du mélange en augmentant la proportion de fond de canard, de préférence jusqu'à deux parties en poids de fond de canard pour une partie en poids de sauce fromage.

De manière générale, on constate que la diminution de la proportion de sauce au fromage abaisse la viscosité alors que l'augmentation de la quantité de fond de canard rend le goût plus fin.

Dans le cas de la sauce préparée selon l'exemple comparatif 6, qui est par elle-même trop liquide et ne permet pas l'obtention du résulta désiré, l'adjonction de fond de canard abaisse encore la viscosité et il est donc impossible de préparer une composition ayant une viscosité acceptable par mélange de cette sauce avec un fond de canard.

## Revendications

1. Produit alimentaire constituée par: une tranche de pain; une préparation culinaire comprenant au moins une partie liquide à la température ambiante; au moins une couche de matière comestible de structure homogène, intercalée entre la tranche de pain et la préparation culinaire, en adhérant sur la tranche de pain tout en retenant la préparation culinaire, caractérisée par le fait que cette matière est essentiellement constituée par une préparation comestible, à base d'amidon gélifié en milieu aqueux, ayant, aussi bien à la température ambiante que dans une gamme de température permettant de réchauffer la préparation culinaire jusqu'à une valeur appropriée pour sa consommation, une consistance telle qu'elle ne coule pas et n'imbibe pas la partie intérieure de la tranche de pain.

2. Procédé de préparation d'un produit alimentaire selon la revendication 1, caractérisé par le fait qu'il comprend les opérations suivantes: préparation d'une tranche de pain; préparation d'une substance comestible à base d'amidon gélifié; réglage de la viscosité de cette substance à une valeur telle qu'elle se prête à son application sur la tranche de pain, tout en obturant les trous ouverts au voisinage de sa surface, sans s'introduire à l'intérieur du pain; étalement d'au moins une couche de la substance se trouvant dans l'état de viscosité ainsi réglée, sur la tranche de pain, de façon à en obturer les trous ouverts; confection d'une préparation alimentaire comprenant au moins une partie liquide à la température ambiante et application de celle-ci sur la surface de revêtement de matière comestible à base d'amidon gélifié.

3. Procédé selon la revendication 2, caractérisé par le fait que la préparation de la substance à base d'amidon gélifié comprend le délayage d'au moins une matière amylacée dans un milieu aqueux et le chauffage du mélange ainsi obtenu à une température et pendant une durée suffisante pour provoquer la gélification de l'amidon.

4. Procédé selon les revendications 2 et 3, caractérisé par le fait que le réglage de la viscosité est effectué par refroidissement du produit contenant de l'amiodon gélifié jusqu'à une température, telle qu'il prenne la consistance désirée.

5. Procédé selon les revendications 2 et 3, caractérisé par le fait que le réglage de la viscosité est effectué par refroidissement du produit contenant de l'amidon gélifié jusqu'à la température ambiante et chauffage ultérieur jusqu'à une température telle qu'il prenne la consistance désirée.

6. Procédé selon l'une des revendications 2 à 5, caractérisé par le fait que la matière amylacée est choisie dans le groupe comprenant l'amidon, les farines de céréales, les farines de légumineuses et les fécules.

7. Procédé selon l'une des revendications 2 à 6, caractérisé par le fait que le milieu aqueux est choisi dans le groupe comprenant l'eau, le lait, les jus de légumes, les jus de viande et les jus de chair de poissons, de crustacés ou de mollusques.

8. Procédé selon l'une des revendications 2 à 7, caractérisé par le fait que l'on chauffe la substance amylacée en présence de matière grasse, de manière à produire un roux, avant son mélange avec le milieu aqueux.

9. Procédé selon la revendication 8, caractérisé par le fait que la matière grasse est choisie parmi le beurre et la margarine.

10. Procédé selon l'une des revendications 2 à 9, caractérisé par le fait que, au cours de l'opération de gélification de la substance amylacée, l'on ajoute au milieu aqueux contenant la substance amylacée au moins une substance alimentaire capable de modifier la viscosité de ce milieu.

11. Procédé selon la revendication 10, caractérisé par le fait que la substance alimentaire, capable de modifier la viscosité du milieu aqueux contenant la substance amylacée, est choisie parmi le jaune d'œuf et le fromage.

12. Procédé selon l'une des revendications 8 à 11, caractérisé par le fait que la matière amylacée est constituée de farine de céréales, le milieu aqueux étant constitué de lait, et par le fait que l'on mélange du jaune d'œuf et du fromage avec le milieu aqueux pour en modifier la viscosité, au cours de l'opération de gélification de l'amidon, que l'on ajoute au produit ainsi obtenu une préparation alimentaire additionnelle liquide ou pâteuse permettant d'en modifier la viscosité et/ou les propriétés organoleptiques et que l'on mélange le tout intimement, de manière à former un produit final pratiquement homogène.

13. Procédé selon la revendication 12, caractérisé par le fait que les proportions de farine de céréales, de matière grasse, de lait, de jaunes d'œuf et de fromage entrant dans la préparation du produit contenant de l'amidon gélifié sont telles que ce produit constitue une sauce au fromage contenant de 70 à 110 grammes de farine par litre de lait.

14. Procédé selon la revendication 12 ou la revendication 13, caractérisé par le fait que la préparation alimentaire additionnelle est choisie parmi les jus et les mousses de légumes, les jus de viande, les jus de chair de poissons, de crustacés ou de mollusques.

15. Procédé selon la revendication 14, caractérisé par le fait que la proportion de préparation alimentaire additionnelle correspond au plus à 50% du poids total de produit.

16. Procédé selon la revendication 16, caractérisé par le fait que la proportion de préparation alimentaire additionnelle est de 30 à 40% du poids total du produit.

17. Procédé selon la revendication 15 ou la revendication 16, caractérisé par le fait que la préparation alimentaire additionnelle est un fond de canard.

18. Procédé selon l'une des revendications 2 à 11, caractérisé par le fait que la matière amylacée est constituée de farine de céréales et le milieu aqueux est constitué de lait, et par le fait que la farine de céréales est incorporée dans un mélange homogène de jaunes d'œuf et de saccharose, avant d'être délayée dans le lait, la température de chauffage pour la gélification de l'amidon étant comprise entre 75 et 85°C.

19. Procédé selon la revendication 18, caractérisé par le fait que la température de chauffage est comprise entre 81 et 83°C.

20. Procédé selon l'une des revendications 2 à 18, caractérisé par le fait que l'on étale sur la tranche de pain au moins deux couches successives de matières comestibles à base d'amidon gélifié, différant entre elles par la nature de leur assaisonnement, la première de ces couches étant appliquée avant la préparation culinaire et la deuxième de ces couches étant appliquée au moins en partie en même temps que la préparation culinaire, de manière à en recouvrir partiellement la surface.

21. Procédé selon la revendication 20, caractérisé par le fait que la première couche de matière comestible à base d'amidon gélifié est constituée par une préparation à goût neutre et peu prononcée, la deuxième couche étant constituée par une préparation de composition similaire mais relevée par un assaisonnement lui conférant un goût plus marqué.

## Patentansprüche

1. Nahrungsmittelprodukt bestehend aus: einer Brotschnitte; einer kulinarischen Präparation, welche zumindest eine bei Umgebungstemperatur flüssige Partie aufweist; zumindest eine Schicht aus essbarer Substanz von homogener Struktur, welche zwischen die Brotschnitt und die kulinarische Präparation in einer Weise eingebracht ist, dass sie an der Brotschnitte anhaftet und auch die kulinarische Präparation zurückhält, dadurch gekennzeichnet, dass diese Substanz im wesentlichen aus einer essbaren Präparation auf der Basis von in einem wässrigen Milieu gelierter Stärke besteht, welche sowohl bei Umgebungstemperatur als auch innerhalb eines Temperaturbereichs, welcher das Wiederaufwärmen der kulinarischen Präparation bis zu einem für die Konsumierung passenden Wert erlaubt, eine derartige Konsistenz aufweist, so dass sie weder fliesst noch die innere Partie der Brotschnitte durchtränkt.

2. Verfahren zur Herstellung eines Nahrungsmittelprodukts nach Anspruch 1, dadurch gekennzeichnet, dass es die folgenden Operationen umfasst: Herstellung einer Brotschnitte; Herstellung einer essbaren Substanz auf Basis von gelierter Stärke, Einstellung der Viskosität dieser Substanz auf einen Wert, welcher ihr Auftragen auf die Brotschnitte erlaubt, wobei die offenen Löcher in Umgebung der Oberfläche verschlossen werden, ohne ins Innere des Brots einzudringen; Auftragen mindestens einer Schicht dieser Substanz, welche eine derart eingestellte Viskosität aufweist, auf die Brotschnitte in einer, die offenen Löcher verschliessenden Weise; Herstellung einer kulinarischen Präparation, welche zumindest eine bei Umgebungstemperatur flüssige Partie aufweist, und Auftragen derselben auf die Oberfläche der Schicht aus essbarer Substanz auf Basis von gelierter Stärke.

3. Verfahren nach Anspruch 2, dadurch gekennzeichnet, dass die Präparation der Substanz auf Basis von gelierter Stärke das Einbringen von mindestens einer stärkehaltigen Substanz in ein wässriges Medium sowie das Erwärmen der hierdurch erhaltenen Mischung auf eine Temperatur und während einer Zeitdauer umfasst, welche ausreichen, um das Gelieren der Stärke auszulösen.

4. Verfahren nach Ansprüchen 2 und 3, dadurch gekennzeichnet, dass die Einstellung der Viskosität durch Abkühlen des die gelierte Stärke enthaltenden Produkts bis zu einer Temperatur umfasst, bei der sie die gewünschte Konsistenz erhält.

5. Verfahren nach Ansprüchen 2 und 3, dadurch gekennzeichnet, dass die Einstellung der Viskosität durch Abkühlen des die gelierte Stärke enthaltenden Produkts auf Umgebungstemperatur erhalten wird sowie durch späteres Aufwärmen bis zu einer Temperatur, bei der sie die gewünschte Konsistenz erhält.

6. Verfahren nach einem der Ansprüche 2 bis 5, dadurch gekennzeichnet, dass die Stärke enthaltende Substanz aus der Gruppe bestehend aus Stärke, Getreidemehle, Gemüsemehle und Stärkepuder ausgewählt ist.

7. Verfahren nach einem der Ansprüche 2 bis 6, dadurch gekennzeichnet, dass das wässrige Medium aus der Gruppe bestehend aus Wasser, Milch, Gemüsesäften, Fleischsäften und Fleischsäften von Fischen, Schalentieren oder wirbellosen Tieren ausgewählt ist.

8. Verfahren nach einem der Ansprüche 2 und 7, dadurch gekennzeichnet, dass die Stärke enthaltende Substanz in Gegenwart von Fettsubstanz vor ihrem Zusammenmischen mit dem wässrigen Medium aufgewärmt wird, um eine Einbrenne zu erzeugen.

9. Verfahren nach Anspruch 8, dadurch gekennzeichnet, dass die Fettsubstanz aus Butter und Margarine gewählt ist.

10. Verfahren nach einem der Ansprüche 2 bis 9, dadurch gekennzeichnet, dass im Laufe der Gelierungsoperation der stärkehaltigen Substanz, dem die stärkehaltige Substanz enthaltenden wässrigen Medium zumindet eine Nahrungsmittelsubstanz zugefügt wird, welche fähig ist, die Viskosität dieses Mittels zu verändern.

11. Verfahren nach Anspruch 10, dadurch gekennzeichnet, dass die Nahrungsmittelsubstanz, welche fähig ist, die Viskosität des die stärkehaltige Substanz enthaltenden wässrigen Mediums zu verändern, aus Eigelb und Käse gewählt ist.

12. Verfahren nach einem der Ansprüche 8 bis 11, dadurch gekennzeichnet, dass die stärkehaltige Substanz aus Getreidemehl und das wässrige Mittel aus Milch besteht, und dass Eigelb und Käse während der Gelieroperation der Stärke dem wässrigen Mittel zugesetzt werden, um seine Viskosität zu verändern, und dass dem derart erhaltenen Pprodukt eine zusätzliche flüssige oder pastenförmige Nahrungsmittelpräparation hinzugefügt wird, um die Viskosität und/oder die geschmacklichen Eigenschaften hiervon zu verändern, und dass das Gesamte miteinander vermischt wird, so dass ein praktisch homogenes Endprodukt erhalten wird.

13. Verfahren nach Anspruch 12, dadurch gekennzeichnet, dass die Proportionen von Getreidemehl, Fettsubstanz, Milch, Eigelb und Käse, welche die Präparation des die gelierte Stärke enthaltenden Produkts bilden, derart sind, dass dieses Produkt eine Käsesauce bildet, welche 70–110 Gramm Mehl auf 1 Liter Milch enthält.

14. Verfahren nach Anspruch 12 oder nach Anspruch 13, dadurch gekennzeichnet, dass die zusätzliche Nahrungsmittelpräparation aus Gemüsesäften oder Pürrees, Fleischsäften von Fischen, Schalentieren oder wirbellosen Tieren gewählt ist.

15. Verfahren nach Anspruch 14, dadurch gekennzeichnet, dass die zusätzliche Nahrungsmittelpräparation zumindest 50% des Gesamtgewichts des Produkts ausmacht.

16. Verfahren nach Anspruch 15, dadurch gekennzeichnet, dass die zusätzliche Nahrungsmittelpräparation zwischen 30 und 40% des Gesamtgewichts des Produkts ausmacht.

17. Verfahren nach Anspruch 15 oder nach Anspruch 16, dadurch gekennzeichnet, dass die zusätzliche Nahrungsmittelpräparation aus einer Entenbase besteht.

18. Verfahren nach einem der Ansprüche 2 bis 11, dadurch gekennzeichnet, dass die stärkehaltige Substanz aus Getreidemehl und das wässrige Medium aus Milch besteht, und dass das Getreidemehl vor seiner Zugabe zur Milch in eine homogene Mischung aus Eigelb und Sacharin eingemischt wird, wobei die Erwärmungstemperatur für die Gelierung der Stärke zwischen 75 und 85°C liegt.

19. Verfahren nach Anspruch 18, dadurch gekennzeichnet, dass die Erwärmungstemperatur zwischen 81 und 83°C liegt.

20. Verfahren nach einem der Ansprüche 2 bis 18, dadurch gekennzeichnet, dass man auf der Brotschnitte mindestens zwei aufeinanderfolgende Schichten der essbaren Substanz auf gelierter Stärkebasis, welche sich untereinander durch ihre Würzung unterscheiden, aufträgt, wobei die erste dieser Schichten vor der kulinarischen Präparation und die zweite dieser Schichten zumindest teilweise gleichzeitig mit der kulinarischen Präparation aufgetragen wird, so dass deren Oberfläche teilweise bedeckt wird.

21. Verfahren nach Anspruch 20, dadurch gekennzeichnet, dass die erste Schicht der essbaren Substanz auf gelierter Stärkebasis aus einer Präparation mit neutralem, wenig ausgeprägtem Geschmack besteht, wohingegen die zweite Schicht aus einer Präparation ähnlicher Komposition besteht, die jedoch durch eine Würzung hervorgehoben wird, die ihr einen ausgeprägteren Geschmack verleiht.

**Claims**

1. Food product constituted by: a slice of bread; a culinary preparation, comprising at leat a part which is liquid at ambient temperature; and at least one layer of edible substance of uniform structure interposed between the slice of bread and the culinary preparation, adhering to the slice of bread and retaining the culinary preparation thereon; characterized in that said substance is essentially constitued by an edible preparation based on starc jellified in an aqueous medium, and having a consistency such that it does not run and is not soaked into the inner portion of the slice of bread either at ambient temperature or in a range of temperature which allows reheating of the culinary preparation until an appropriate value for its consumption.

2. Method of preparing a food product according to claim 1, characterized in that it comprises the following operations: preparing a slice of bread, preparing an edible substance based on jellified starch; adjusting the viscosity of said substance to a value such that it lends itself to being applied to the slice of bread, to close open holes in the vicinity of its surface without penetrating into the interior of the bread; spreading at least one layer of the substance, while its state of viscosity is adjusted in said manner, over the slice of bread in order to close the open holes therein; and preparing a culinary preparation, comprising at least a part which is liquid at ambient temperature, and applying it to the surface of the layer of edible substance based on jellified starch.

3. Method according to claim 2, characterized in that the substance based on jellified starch is prepared by mixing at least one starchy material in an aqueous medium and heating the mixture thus obtained to a sufficient temperature and for a sufficient length of time to cause the starch to jellify.

4. Method according to claim 2 or 3, characterized in that the adjustment of the viscosity is carried out by cooling the products containing the jellified starch to a temperature at which it assumes the desired consistency.

5. Method according to claim 2 or 3, characterized in that the adjustment of the viscosity is carried out by cooling the products containing the jellified starch to ambient temperature and later heating it to a temperature such that it assumes the desired consistency.

6. Method according to one of claims 2–5, characterized in that the starchy material is chosen from the group constituted by: starch, flour made from cereal plants, flour made from leguminous plants, and potatoe starch.

7. Method according to one of claims 2–6, characterized in that the aqueous medium is chosen from the group constituted by: water, milk, vegetable juices, meat juices, and juices from the flesh of fish, of crustaceans or of molluscs.

8. Method according to one of claims 2–7, characterized in that prior to being mixed with the aqueous medium, the starch material is heated in the presence of fat to produce a browning.

9. Method according to claim 8, characterized in that the fat is chosen fom butter and margarine.

10. Method according to one of claims 2–9, characterized in that at least one food substance capable of modifying the viscosity of the medium is added to the aqueous medium containing the starchy material while the starch material is being jellified.

11. Method according to claim 1, characterized in that the food substance capable of modifying the viscosity of the aqueous medium containing the starchy material is chosen from egg yolk and cheese.

12. Method according to one of claims 8–11, characterized in that the starchy material is constituted by cereal flour, the aqueous medium is constituted by milk, and that egg yolk and cheese are mixed with the aqueous medium to modify its viscosity while the starch is jellifying, that an additional liquid or pasty food preparation is added to the product obtained in this way, which permits to modify the viscosity and/or organoleptic properties, that the preparation is intimately mixed so as to form a substantially homogenous final product.

13. Method according to claim 12, characteized in that the proportions of cereal flour, of fat, of milk, of egg yolk, and of cheese used in the preparation of the product containing the jellified starch are such that this product constitutes a cheese sauce containing 70 to 110 grams of flour per 1 liter milk.

14. Method according to claim 12 or to claim 13, characterized in that the additional food preparation is chosen from the juices and mousses of vegetables, from the juices of meat, from the juices of the flesh of fish, of crustaceans, or of molluscs.

15. Method according to claim 14, characterized in that the proportion of the additional food preparation corresponds to not more than 50% of the total weight of the product.

16. Method according to claim 15, characterized in that the proportion of the additional food preparation is 30% to 40% of the total weight of the product.

17. Method according to claim 15 or claim 16, characterized in that the additional food preparation is a duck stock.

18. Method according to one of claims 2–11, characterized in that the starchy material is constituted by cereal flour and the aqueous medium is constituted by milk, and that prior to being mixed in the milk, the cereal flour is incorporated in a homogenous mixture of egg yolk and sucrose, the heating temperature for jellification lying in the range 75°C to 85°C.

19. Method according to claim 18, characterized in that the temperature lies in the range 81°C to 83°C.

20. Method according to one of claims 2–18, characterized in that at least two successive layers of food substances based on jellified starch differing from each other by the seasoning are spread on the slice of bread, the first of these layers being applied prior to the culinary preparation, and the second of these layers being applied, at leat in part, at the same time as the culinary preparation, in such a manner as to partially cover the surface thereof.

21. Method according to claim 20, characterized in that the first layer of edible substance based on jellified starch is constituted by a preparation of neutral or bland taste, and the second layer is constituted by a preparation having a similar composition, but is seasoned to have a more marked taste.